# EUROPEAN PATENT SPECIFICATION

(11) **EP 4 342 760 B1**
(45) Date of publication and mention of the grant of the patent: **28.01.2026**
(21) Application number: 22315216.6
(22) Date of filing: 23.09.2022
(51) Int. Cl.: B61D 17/06, B60S 1/06, B61D 17/22, B61D 25/00, B61D 29/00, B60Q 1/04

(54) **VEHICLE HEAD OF A RAIL VEHICLE COMPRISING A CENTRALLY POSITIONED OPENABLE EQUIPMENT UNIT**
FAHRZEUGKOPF EINES SCHIENENFAHRZEUGS MIT EINER ZENTRAL POSITIONIERTEN ZU ÖFFNENDEN AUSRÜSTUNGSEINHEIT
TÊTE DE VÉHICULE D'UN VÉHICULE FERROVIAIRE COMPRENANT UNE UNITÉ D'ÉQUIPEMENT OUVRABLE POSITIONNÉE DE MANIÈRE CENTRALE

(43) Date of publication of application: 27.03.2024
(73) Proprietor: ALSTOM Holdings, 93400 Saint-Ouen-sur-Seine (FR)
(72) Inventor: Garden, Andrew, Nottingham NG9 6DD (GB); Swann, Matthew, Lichfield WS14 9XL (GB); Foster, Leo, Nottingham NG9 1HQ (GB); Chillingworth, Tom, Derby DE24 5AE (GB)
(74) Representative: Alatis

(56) References cited:
- EP-A1- 0 422 405
- CN-U- 201 914 264
- CN-U- 207 416 842
- JP-A- 2001 146 130
- JP-A- 2007 246 019
- JP-B2- 3 443 598
- US-A1- 2017 183 017
- US-B2- 10 400 977

## Description

### TECHNICAL FIELD OF THE INVENTION

The present invention relates to a rail vehicle, particularly to a head of a rail vehicle.

### BACKGROUND ART

The head of a rail vehicle usually comprises a body structure housing at least a part of a driver's cabin covered by a skin, which provides an aerodynamic profile and an aesthetically appealing trim, as illustrated for example in EP 0 888 946. The skin can be made of one piece of GRP (Glass Reinforced Plastics) with at least one opening for a windscreen made of a glass pane.

To reach the body structure or pieces of equipment of the vehicle head located between the body structure and the skin, for instance to perform maintenance work such as replacing a headlight module of the vehicle, the entire skin has to be removed from its operational position. Handling operations are complex and costly, resulting in significant vehicle downtime and a risk of damage to the skin or bodywork during handling.

Therefore, skins manufactured as an assembly of two or more parts have been developed. Such assemblies allow the maintenance operators to just remove the parts of the assembly that cover the pieces of equipment involved in the maintenance process, as illustrated e.g. in DE29807576U1. Although this improvement simplifies and shortens the maintenance work, it is still necessary to disassemble and reassemble a part of the body skin, which does not completely eliminate the risk of damage to the skin during handling.

In the field of road vehicles such as cars or buses, document US10400977 discloses a vehicle headlight assembly fixed to a structure of a main body and having a headlight cover movable through a hinge axis between an operational and a maintenance position. Such an assembly allows an operator to perform maintenance work on a headlight unit, for example to adjust the headlight beams or replace burnt out bulbs, just by pivoting the headlight cover without tools. This headlight cover, however, does not provide access to other pieces of equipment. To perform maintenance work on other components located close to the headlight assembly, the entire front-bumper body shell of a vehicle still needs to be removed, leading to the issues described previously.

The document DE19921927A1 discloses a central bonnet movable about a hinge between an operational position and a maintenance position, comprising a cavity which is closed by the central bonnet in the operational position and accessible from outside when the headlight assembly is in the maintenance position. Although this improvement simplifies and shortens the maintenance work, the whole cavity must be opened in order to change the headlight assembly, leaving other pieces of equipment, which are not targeted by the maintenance operation, in the open environment. Further related prior art is known from JP3443598B2.

### SUMMARY OF THE INVENTION

The invention aims to provide a vehicle head configuration in which the access to the components protected by the body shell is simpler and safer, especially in a case of a vehicle head comprising centrally positioned openable equipment unit such as a central gangway, a central bonnet or a detrainment door.

According to a first aspect of the invention, there is provided a vehicle head of a rail vehicle, comprising a centrally positioned openable equipment unit such as a central gangway, a central bonnet or a detrainment door and at least a first lateral headlight assembly located laterally from the centrally positioned openable equipment unit, wherein the first lateral headlight assembly comprises a headlight unit and a headlight bonnet fixed to one another, and the headlight bonnet is linked to a body structure of the vehicle head through a first hinge and movable about a first hinge axis between an operational position and a maintenance position.

The vehicle head is equipped with a wiper motor unit, covered by a wiper motor cover fixed to the body structure of the vehicle head by means of fixing elements, wherein the fixing elements are covered by the headlight assembly in the operational position and accessible from outside when the headlight assembly is in the maintenance position.

Such a hinge allows an operator to rotate the headlight assembly between an operational position and a maintenance position to perform maintenance tasks without removing a single part of the vehicle head, allowing for easier and safer maintenance work, lowering the risks of damage to the headlight assembly or any other part of the vehicle head.

Preferably, the hinge axis is vertical. Thus, the rotation of the headlight assembly between the operational position and the maintenance requires less force, since the operator does not have to support or counterbalance the weight of the headlight assembly.

Preferably, at least one of the following is true:
- the first the hinge axis is closer to a longitudinal centre plane of the vehicle head than a centre of gravity the headlight assembly.
- the first hinge axis is farther away from the longitudinal centre plane than a centre of gravity of the headlight assembly.
- the first hinge axis is located at a recessed location relative to an outer skin of the vehicle head so as to be covered by the outer skin of the vehicle head.
- the first hinge has a bracket fixed to the body structure of the vehicle head and a swivel bracket fixed to the headlight assembly.
- the first hinge is provided with a stop for preventing or limiting an outward movement of the headlight assembly beyond the maintenance position.

In a preferred embodiment, the headlight bonnet is flush with the outer skin of the vehicle head in the operational position.

In a preferred embodiment, the head further comprises a first lateral cavity which is closed by the headlight assembly in the operational position and accessible from outside when the headlight assembly is in the maintenance position.

In a preferred embodiment, the centrally positioned equipment unit is a central bonnet hinged to a body structure of the vehicle head trough a bonnet hinge assembly and pivotable between an operational position and a maintenance position.

In a preferred embodiment, the vehicle head further comprises a central cavity, which is closed by the central bonnet in the operational position and accessible from outside when the central bonnet is in the maintenance position, the central cavity preferably housing a coupling.

In one embodiment, the headlight assembly is provided with a sealing gasket, which, in the operational position, bears against edges of an outer skin of the vehicle head. This protects the lateral cavity from water and dirt.

In one embodiment, the central cavity is directly connected with the lateral cavity so that the lateral cavity is at least partially accessible from outside when the headlight assembly is in operational position and the central bonnet in maintenance position, and the central cavity is at least partially accessible from outside when the headlight assembly is in maintenance position and the central bonnet in operational position.

The bonnet hinge assembly may comprise two parallel hinge linkage assemblies, located on opposite sides of a vertical median longitudinal plane of the vehicle head. Alternatively, the bonnet hinge assembly may consist of one hinge linkage assembly located on one side of the vertical median longitudinal plane.

In one embodiment, at least one upper edge of the central bonnet and a lower edge of the windscreen are contiguous when the central bonnet is in the operational position.

In one embodiment, the central cavity houses a coupling.

In one embodiment, the headlight assembly in the operational position is fixed to the outer skin or to the body structure of the vehicle head by means of fixing elements, which are accessible from outside when the central bonnet is in the maintenance position and are not accessible from outside when the central bonnet is in the operational position.

In one embodiment, the vehicle head is equipped with one or more pieces of equipment fixed to the body structure of the vehicle head, covered by the headlight assembly in the operational position and accessible from outside when the headlight assembly is in the maintenance position. The pieces of equipment are preferably not in contact with the headlight assembly in the operational position.

In one embodiment, the headlight assembly in the operational position is fixed to the outer skin or to the body structure of the vehicle head by means of fixing elements, which are accessible from outside when the headlight is in the operational position. Preferably, the fixing elements are recessed with respect to an outer surface of the outer skin or an outer surface of the headlight assembly in the operational position.

In one embodiment, the headlight assembly is provided with a sealing gasket, which, in the operational position, bears against edges of the outer skin of the vehicle head.

In one embodiment, the head is equipped with one or more pieces of equipment fixed to the body structure of the vehicle head, covered by the headlight assembly in the operational position and accessible from outside when the headlight assembly is in the maintenance position. The one or more pieces of equipment include one or more of the following:
- a piece of mechanical equipment, in particular an anti-climber, a bumper, a shock-absorber;
- a piece of pneumatic equipment, in particular a stop cock, valves, filters, manifolds;
- a piece of electrical equipment;
- a whistle.

### BRIEF DESCRIPTION OF THE FIGURES

Other advantages and features of the invention will then become more clearly apparent from the following description of a specific embodiment of the invention given as non-restrictive example only and represented in the accompanying drawings in which:
- figure 1 is an isometric view of a vehicle head of a rail vehicle in a operational position;
- figure 2 is a front view of figure 1;
- figure 3 is a right view of figure 1;
- figure 4 is a right view of a lateral headlight assembly in a maintenance position;
- figure 5 is an isometric view of figure 4;
- figure 6 is a top view of figure 4;
- figure 7 is an isometric view of a vehicle head of a rail vehicle provided with a central bonnet in a maintenance position;
- figure 8 is a front view of figure 7;
- figure 9 is a front view of a detail of a vehicle head of a rail vehicle in a maintenance position according to the same embodiment as in figure 7.

Corresponding reference numerals refer to the same or corresponding parts in each of the figures.

### DETAILED DESCRIPTION OF PREFERRED EMBODIMENTS

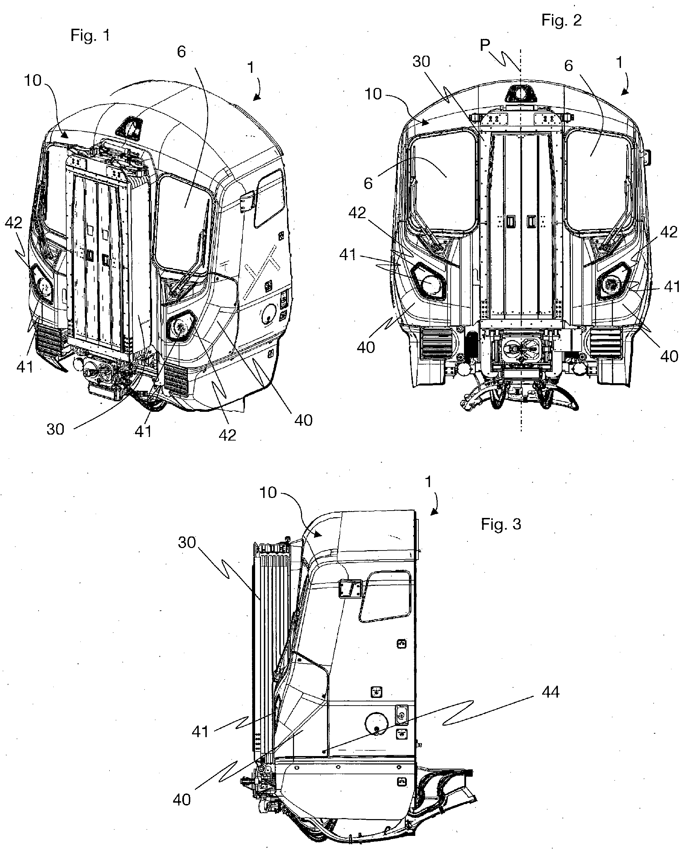

With reference to figures 1,2 and 3 a vehicle head **1** of a rail vehicle comprises a central gangway **30** arranged to allow passengers to move from a first end car to a second end car connected with the first car and at least one windscreen **6** for a driver located in a driver's cabin partly housed in the vehicle head **1.** The head **1** is formed by a body structure **20** covered by an outer skin **10.** The outer skin **10** bestows to the head its shape and is made of light material, for instance of GRP (Glass Reinforced Plastics). The outer skin **10** is overall symmetrical about a longitudinal centre plane **P.**

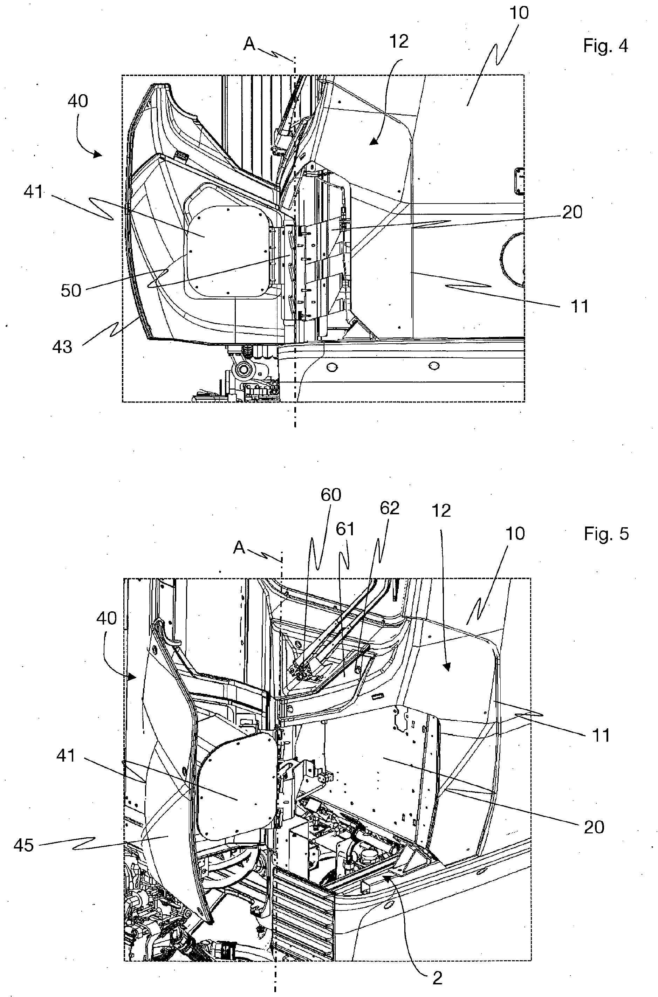

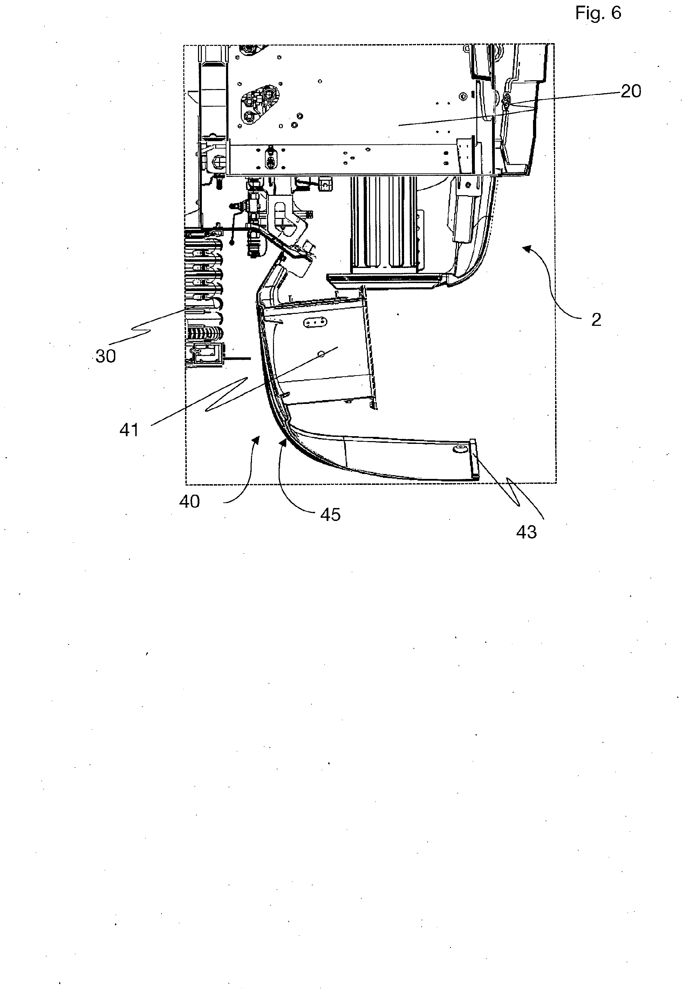

The head **1** further comprises at least one lateral headlight assembly **40** on one side of the central gangway **30,** and preferably two lateral headlight assemblies **40,** one on each side of the central gangway **30.** At least one, and preferably each, of the headlight assemblies **40** is movable between an operational position and a maintenance position. In figures 4,5 and 6 the headlight assembly **40** is illustrated in a maintenance position, leaving a lateral cavity **2** accessible from outside. When the headlight assembly is in operational position, the lateral cavity **2** is closed (figures 1,2 and 3). The headlight assembly **40** is pivotable about a hinge axis **A** between the operational position and the maintenance position by means of a hinge **50.**

In the described embodiment, the hinge axis **A** is vertical and closer to the longitudinal centre plane **P** than a centre of gravity of the headlight assembly **40,** such that the headlight assembly **40** moves towards the median vertical plane of the vehicle head 1 to give access to the lateral cavity **2.** Alternatively, it also possible to place the hinge axis **A** closer to side of the vehicle head **1** than the centre of gravity of the headlight assembly **40,** so that the headlight assembly **40** moves away from the median vertical plane of the vehicle head 1 to give access to the lateral cavity **2.**

The hinge axis **A** is preferably located at a recessed location relative to the outer skin **10** of the vehicle head such as to be covered by the outer skin **10** of the vehicle head. The hinge **50** has a bracket fixed to the body structure **20** of the vehicle head **1** and a swivel bracket fixed to the headlight assembly **40.** The hinge **50** is provided with a stop for preventing or limiting an outward movement of the headlight assembly beyond the maintenance position. Thus, an operator willing to perform maintenance work can move the headlight assembly **40** from operational to maintenance position easily without having to remove the entire outer skin **10** of the head **1.**

The headlight assembly **40** comprises a headlight unit **41** and a headlight bonnet **42** fixed to one another, the headlight bonnet **42** being linked to a body structure **20** of the vehicle head **1.** In the maintenance position, the headlight unit **41** is removable from the assembly, for instance to replace a defective light bulb. In the operational position, the headlight bonnet **42** is flush with the outer skin **10** of the head **1.**

The headlight assembly **40** is provided with a sealing gasket **43.** In the operational position, the sealing gasket **43** bears against edges **11** of the outer skin **10.** Thanks to the sealing gasket **43,** water or dirt from the external environment cannot enter the closed lateral cavity **2.** The sealing gasket **43** can be made from elastomer materials such as rubber.

In the described embodiment, the headlight assembly **40** in the operational position can be fixed to the outer skin **10** of the vehicle head by means of fixing elements **44,** which are preferably accessible from outside in the operational position. Here, the fixing elements **44** comprise screws, yet any other fixing means allowing to be easily removed or assembled are relevant. In a preferred embodiment, the fixing elements **44** are recessed with respect to an outer surface **12** of the outer skin **10** and an outer surface **45** of the headlight assembly in the operational position. Thus, the lifespan of such fixing elements can be significantly increased.

In the lateral cavity **2,** the vehicle head **1** is equipped with one or more pieces of equipment fixed to the body structure **20** of the vehicle head **1** covered by the headlight assembly **40** in the operational position and accessible from outside when the headlight assembly is in the maintenance position. The one or more pieces of equipment can include: a piece of pneumatic equipment, a piece of electrical equipment and/or a whistle. In such configuration, an operator can perform maintenance work not only on the headlight assembly **40,** but also on other pieces of equipment of the vehicle head **1** without removing the entire outer skin **10** of the vehicle head **1.**

The vehicle head **1** is equipped with a wiper motor unit **60** for the windscreen **6.** The wiper motor unit **60** is covered by a wiper motor cover **61** fixed to the body structure **20** of the vehicle head **1** by the means of fixing elements **62.** Here, the fixing elements **62** comprise screws, yet any other fixing means allowing to be easily removed or assembled are relevant. The fixing elements **62** are covered by the headlight assembly **40** in the operational position and accessible from outside when the headlight assembly **40** is in the maintenance position.

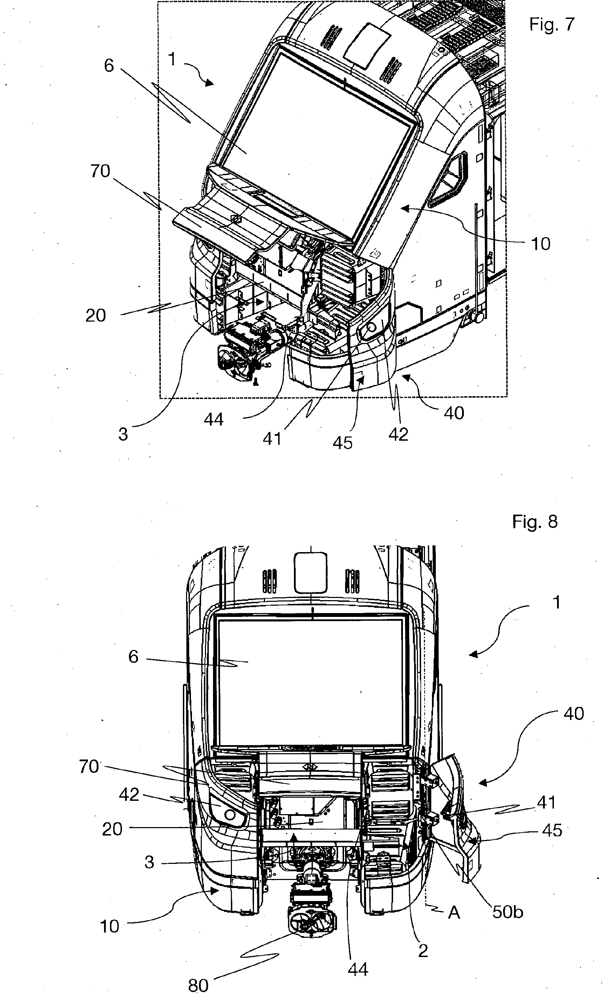

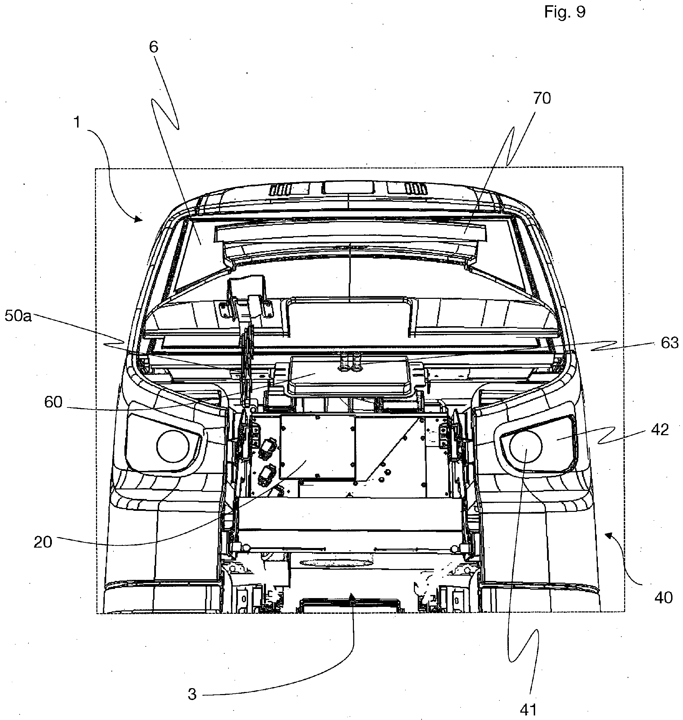

With reference to figures 7, 8 and 9 a vehicle head **1** of a rail vehicle comprises at least a windscreen **6** for a driver located in a driver's cabin partly housed in the vehicle head **1.** The head **1** is formed by a body structure **20** covered by an outer skin **10.** The outer skin **10** bestows to the head its shape and is made of light material, for instance of GRP (Glass Reinforced Plastics). The outer skin **10** is overall symmetrical about a longitudinal centre plane **P.** The head **1** further comprises a central bonnet **70** movable between an operational position and a maintenance position. Here, the central bonnet **70** is illustrated in a maintenance position, leaving a central cavity **3** accessible from outside. The central bonnet **70** is pivotable between the operational position and the maintenance position by means of a hinge bonnet assembly **50a.**

In the described embodiment, the head **1** comprises at least one lateral headlight assembly **40** on one side of the central bonnet **70,** and preferably two lateral headlight assemblies **40,** one on each side of the central bonnet **70.** At least one, and preferably each, of the headlight assemblies **40** is movable between an operational position and a maintenance position. The headlight assembly **40** comprises a headlight unit **41** and a headlight bonnet **42** fixed to one another, the headlight bonnet **42** being linked to a body structure **20** of the vehicle head **1.** In maintenance position, the headlight assembly **40** leaves a lateral cavity **2** accessible from outside. When the headlight assembly is in operational position, the lateral cavity **2** is closed. The lateral cavity **2** is directly connected with the central cavity **3.** Thus, the lateral cavity may be at least partially accessed through the central cavity **3** when the headlight assembly **40** is in operational position and the central bonnet **70** is in maintenance position as illustrated in figure 7 and, conversely, the central cavity **3** may be at least partially accessed through the lateral cavity **2** when the headlight assembly **40** is in maintenance position and the central bonnet **70** is in operational position. The headlight assembly **40** is pivotable about a vertical hinge axis **A** between the operational position and the maintenance position by means of a hinge **50b.**

In the described embodiment, the hinge axis **A** is farther away from the longitudinal centre plane **P** than a centre of gravity of the headlight assembly **40,** such that the headlight assembly **40** moves away from the median vertical plane of the vehicle head **1** to give access to the lateral cavity 2. That way, the headlight assembly **40** in maintenance position does not hinder the opening of the central bonnet **70.**

The hinge axis **A** is preferably located at a recessed location relative to the outer skin **10** of the vehicle head **1** such as to be covered by the outer skin **10** of the vehicle head. The hinge **50b** has a bracket fixed to the body structure **20** of the vehicle head **1** and a swivel bracket fixed to the headlight assembly **40.** The hinge **50b** is provided with a stop for preventing or limiting an outward movement of the headlight assembly beyond the maintenance position. Thus, an operator willing to perform maintenance work can move the headlight assembly **40** from operational to maintenance position easily without having to remove the entire outer skin **10** of the head **1.**

The hinge assembly **50a** has a bracket fixed to the body structure **20** of the vehicle head **1** and a swivel bracket fixed to the central bonnet **70.** The hinge **50a** is provided with a stop for preventing or limiting an outward movement of the headlight assembly beyond the maintenance position. Thus, an operator willing to perform maintenance work can move the central bonnet **70** from operational to maintenance position easily without having to remove the entire outer skin **10** of the head **1.**

The headlight assembly **40** comprises a headlight unit **41** and a headlight bonnet **42.** In the maintenance position, the headlight unit **41** is removable from the assembly, for instance to replace a defective light bulb. In the operational position, the headlight bonnet **42** is flush with the outer skin **10** of the head **1.**

The headlight assembly **40** is provided with a sealing gasket **43.** In the operational position, the sealing gasket **43** bears against edges **11** of the outer skin **10.** Thanks to the sealing gasket **43,** water or dirt from cannot enter the closed lateral cavity 2. The sealing gasket **43** can be made from elastomer materials such as rubber.

In the described embodiment, the headlight assembly **40** in the operational position can be fixed to the outer skin **10** of the vehicle head by means of fixing elements **44,** which are preferably accessible from outside in the operational position. Here, the fixing elements **44** comprise screws, yet any other fixing means allowing to be easily removed or assembled are relevant. In a preferred embodiment, the fixing elements **44** are recessed with respect to an outer surface **12** of the outer skin **10** and an outer surface **45** of the headlight assembly in the operational position. Thus, the lifespan of such fixing elements can be significantly increased.

In the central cavity **3** and in the lateral cavity **2,** the vehicle head **1** is equipped with one or more pieces of equipment fixed to the body structure **20** of the vehicle head **1** covered by the headlight assembly **40** and by the central bonnet **70** in the operational position and accessible from outside when the headlight assembly **40** and the central bonnet **70** are in the maintenance position. The one or more pieces of equipment can include: a piece of pneumatic equipment, a piece of electrical equipment and/or a whistle. Particularly, a coupler **80** to connect the vehicle to another vehicle becomes easily accessible when the central bonnet **70** is in maintenance position.

The vehicle head **1** is equipped with a wiper motor unit **60** for the windscreen **6.** The wiper motor unit **60** is covered by a wiper motor cover **61** fixed to the body structure **20** of the vehicle head **1** by the means of fixing elements **62.** The wiper motor unit **60** is received in a cut-out portion of the central bonnet and at least partially accessible from outside when the central bonnet **70** is in the operational position and is accessible from outside when the central bonnet **70** is in the maintenance position.

The vehicle head **1** further comprises a socket **63** for receiving a wiper shaft 64 accessible from outside when the central bonnet **70** is in the operational position. It is therefore possible to switch the central bonnet **70** from the operational position to the maintenance position without removing the wiper shaft **64** or any other component from the wiper motor unit **60.** The wiper motor unit **60** is preferably flush with the central bonnet **70** in the operational position.

In operational position, at least one upper edge of the central bonnet **70** and a lower edge of the windscreen **6** are contiguous. To avoid any damage caused to the windscreen **6** by a violent opening of the central bonnet **70** the bonnet hinge **50a** comprises pivoting elements **51** on both sides of the wiper motor unit **60.** The pivoting elements **51** are offset from the bonnet hinge axis **A'** so that the pivotal movement of the central bonnet **70** is accompanied by a slight vertical translation from the central bonnet **70.**

The wiper motor unit can further comprise a humidity sensor, accessible from outside when the central bonnet **70** is in the operational position and accessible from outside when the central bonnet **70** is in the maintenance position.

## Claims

1. A vehicle head (1), comprising a centrally positioned openable equipment unit such as a central gangway (30), a central bonnet (70) or a detrainment door and at least a first lateral headlight assembly (40) located laterally from the centrally positioned openable equipment unit, wherein the first lateral headlight assembly (40) comprises a headlight unit (41) and a headlight bonnet (42) fixed to one another, the headlight bonnet (42) being linked to a body structure (20) of the vehicle head (1) through a first hinge (50) and movable about a first hinge axis (A) between an operational position of the first lateral headlight assembly (40) and a maintenance position of the first lateral headlight assembly (40) **characterised in that** the vehicle head (1) is a vehicle head of a rail vehicle and is equipped with a wiper motor unit (60), covered by a wiper motor cover (61) fixed to the body structure (20) of the vehicle head (1) by means of fixing elements (62), wherein the fixing elements (62) are covered by the headlight assembly (40) in the operational position and accessible from outside when the headlight assembly (40) is in the maintenance position.

2. The vehicle head (1) of claim 1, wherein the first hinge axis (A) is vertical.

3. The vehicle head (1) of any one of the preceding claims, wherein at least one of the following is true:
- the first the hinge axis (A) is closer to a longitudinal centre plane (P) of the vehicle head (1) than a centre of gravity of the first lateral headlight assembly (40).
- the first hinge axis (A) is farther away from the longitudinal centre plane (P) than a centre of gravity of the first lateral headlight assembly (40).
- the first hinge axis (A) is located at a recessed location relative to an outer skin (10) of the vehicle head (1) so as to be covered by the outer skin (10) of the vehicle head (1).
- the first hinge (50) has a bracket fixed to the body structure (20) of the vehicle head (1) and a swivel bracket fixed to the first lateral headlight assembly (40).
- the first hinge (50) is provided with a stop for preventing or limiting an outward movement of the headlight assembly (40) beyond the maintenance position.

4. The vehicle head (1) of any one of the preceding claims, wherein the headlight bonnet (42) is flush with the outer skin (10) of the vehicle head (1) in the operational position.

5. The vehicle head (1) of any one of the preceding claims, further comprising a first lateral cavity (2), which is closed by the headlight bonnet (42) in the operational position and accessible from outside when the headlight assembly (40) is in the maintenance position.

6. The vehicle head (1) of any of the preceding claims, wherein the centrally positioned equipment unit is a central bonnet (70) hinged to a body structure (20) of the vehicle head trough a bonnet hinge assembly (50a) and pivotable between an operational position and a maintenance position.

7. The vehicle head (1) of claim 6, further comprising a central cavity (3), which is closed by the central bonnet (70) in the operational position and accessible from outside when the central bonnet (70) is in the maintenance position, the central cavity (3) preferably housing a coupling (80).

8. The vehicle head (1) of claim 7 in combination with claim 5, wherein the central cavity (3) is directly connected with the lateral cavity (2) so that the lateral cavity (2) is at least partially accessible from outside when the headlight assembly (40) is in operational position and the central bonnet (70) in maintenance position, and the central cavity (3) is at least partially accessible from outside when the headlight assembly (40) is in maintenance position and the central bonnet (70) in operational position.

9. The vehicle head (1) of any one of claims 6 to 8, wherein the headlight assembly (40) in the operational position is fixed to the outer skin (10) or to the body structure (20) of the vehicle head (1) by means of fixing elements (44), which are accessible from outside when the central bonnet (70) is in the maintenance position and are not accessible from outside when the central bonnet (70) is in the operational position.

10. The vehicle head (1) of any one of claims 1 to 8, wherein the headlight assembly (40) in the operational position is fixed to the outer skin (10) or to the body structure (20) of the vehicle head (1) by means of fixing elements (44), which are accessible from outside when the headlight is in the operational position.

11. The vehicle head (1) of any one of claims 9 to 10, wherein the fixing elements (44) are recessed with respect to an outer surface (12) of the outer skin (10) or an outer surface (45) of the headlight assembly (40) in the operational position.

12. The vehicle head (1) of any one of the preceding claims, wherein the headlight assembly (40) is provided with a sealing gasket (43), which, in the operational position, bears against edges (11) of the outer skin (10) of the vehicle head.

13. The vehicle head (1) of any one of the preceding claims, equipped with one or more pieces of equipment fixed to the body structure (20) of the vehicle head (1), covered by the headlight assembly (40) in the operational position and accessible from outside when the headlight assembly (40) is in the maintenance position.

14. The vehicle head (1) of claim 13, wherein the one or more pieces of equipment include one or more of the following:
- a piece of mechanical equipment, in particular an anti-climber, a bumper, a shock-absorber;
- a piece of pneumatic equipment, in particular a stop cock, valves, filters, manifolds;
- a piece of electrical equipment;
- a whistle.

## Patentansprüche

1. Fahrzeugkopf (1), umfassend eine zentral positionierte öffenbare Ausrüstungseinheit wie einen zentralen Durchgang (30), eine zentrale Haube (70) oder eine Ausstiegstür und mindestens eine erste seitliche Scheinwerferanordnung (40), die seitlich von der zentral positionierten öffenbaren Ausrüstungseinheit angeordnet ist, wobei die erste seitliche Scheinwerferanordnung (40) eine Scheinwerfereinheit (41) und eine Scheinwerferhaube (42) umfasst, die aneinander befestigt sind, wobei die Scheinwerferhaube (42) mit einer Körperstruktur (20) des Fahrzeugkopfs (1) durch ein erstes Scharnier (50) verbunden ist und um eine erste Scharnierachse (A) zwischen einer Betriebsposition der ersten seitlichen Scheinwerferanordnung (40) und einer Wartungsposition der ersten seitlichen Scheinwerferanordnung (40) bewegbar ist, **dadurch gekennzeichnet, dass** der Fahrzeugkopf (1) ein Fahrzeugkopf eines Schienenfahrzeugs ist und mit einer Wischermotoreinheit (60) ausgestattet ist, die von einer Wischermotorabdeckung (61) bedeckt ist, die an der Körperstruktur (20) des Fahrzeugkopfs (1) mittels Befestigungselementen (62) befestigt ist, wobei die Befestigungselemente (62) von der Scheinwerferanordnung (40) in der Betriebsposition bedeckt sind und von außen zugänglich sind, wenn die Scheinwerferanordnung (40) in der Wartungsposition ist.

2. Fahrzeugkopf (1) nach Anspruch 1, wobei die erste Scharnierachse (A) vertikal ist.

3. Fahrzeugkopf (1) nach einem der vorstehenden Ansprüche, wobei mindestens eines der Folgenden zutrifft:
- die erste Scharnierachse (A) ist näher an einer Längsmittelebene (P) des Fahrzeugkopfs (1) als ein Schwerpunkt der ersten seitlichen Scheinwerferanordnung (40);
- die erste Scharnierachse (A) ist weiter entfernt von der Längsmittelebene (P) als ein Schwerpunkt der ersten seitlichen Scheinwerferanordnung (40);
- die erste Scharnierachse (A) ist an einer zurückversetzten Stelle relativ zu einer Außenhaut (10) des Fahrzeugkopfs (1) angeordnet, um von der Außenhaut (10) des Fahrzeugkopfs (1) bedeckt zu werden;
- das erste Scharnier (50) weist eine an der Körperstruktur (20) des Fahrzeugkopfs (1) befestigte Halterung und eine an der ersten seitlichen Scheinwerferanordnung (40) befestigte Schwenkhalterung auf;
- das erste Scharnier (50) wird mit einem Anschlag zum Verhindern oder Begrenzen einer Auswärtsbewegung der Scheinwerferanordnung (40) über die Wartungsposition hinaus versehen.

4. Fahrzeugkopf (1) nach einem der vorstehenden Ansprüche, wobei die Scheinwerferhaube (42) in der Betriebsposition bündig mit der Außenhaut (10) des Fahrzeugkopfs (1) ist.

5. Fahrzeugkopf (1) nach einem der vorstehenden Ansprüche, ferner umfassend einen ersten seitlichen Hohlraum (2), der durch die Scheinwerferhaube (42) in der Betriebsposition verschlossen wird und von außen zugänglich ist, wenn die Scheinwerferanordnung (40) in der Wartungsposition ist.

6. Fahrzeugkopf (1) nach einem der vorstehenden Ansprüche, wobei die zentral positionierte Ausrüstungseinheit eine zentrale Haube (70) ist, die über eine Haubenscharnieranordnung (50a) an einer Körperstruktur (20) des Fahrzeugkopfs angelenkt und zwischen einer Betriebsposition und einer Wartungsposition schwenkbar ist.

7. Fahrzeugkopf (1) nach Anspruch 6, ferner umfassend einen zentralen Hohlraum (3), der durch die zentrale Haube (70) in der Betriebsposition verschlossen wird und von außen zugänglich ist, wenn die zentrale Haube (70) in der Wartungsposition ist, wobei der zentrale Hohlraum (3) vorzugsweise eine Kupplung (80) beherbergt.

8. Fahrzeugkopf (1) nach Anspruch 7 in Kombination mit Anspruch 5, wobei der zentrale Hohlraum (3) direkt mit dem seitlichen Hohlraum (2) verbunden ist, sodass der seitliche Hohlraum (2) mindestens teilweise von außen zugänglich ist, wenn die Scheinwerferanordnung (40) in Betriebsposition und die zentrale Haube (70) in Wartungsposition ist, und der zentrale Hohlraum (3) mindestens teilweise von außen zugänglich ist, wenn die Scheinwerferanordnung (40) in Wartungsposition und die zentrale Haube (70) in Betriebsposition ist.

9. Fahrzeugkopf (1) nach einem der Ansprüche 6 bis 8, wobei die Scheinwerferanordnung (40) in der Betriebsposition an der Außenhaut (10) oder an der Körperstruktur (20) des Fahrzeugkopfs (1) mittels Befestigungselementen (44) befestigt ist, die von außen zugänglich sind, wenn die zentrale Haube (70) in der Wartungsposition ist, und von außen nicht zugänglich sind, wenn die zentrale Haube (70) in der Betriebsposition ist.

10. Fahrzeugkopf (1) nach einem der Ansprüche 1 bis 8, wobei die Scheinwerferanordnung (40) in der Betriebsposition an der Außenhaut (10) oder an der Körperstruktur (20) des Fahrzeugkopfs (1) mittels Befestigungselementen (44) befestigt ist, die von außen zugänglich sind, wenn der Scheinwerfer in der Betriebsposition ist.

11. Fahrzeugkopf (1) nach einem der Ansprüche 9 bis 10, wobei die Befestigungselemente (44) in der Betriebsposition in Bezug auf eine Außenoberfläche (12) der Außenhaut (10) oder einer Außenoberfläche (45) der Scheinwerferanordnung (40) zurückversetzt sind.

12. Fahrzeugkopf (1) nach einem der vorstehenden Ansprüche, wobei die Scheinwerferanordnung (40) mit einer Dichtung (43) versehen ist, die in der Betriebsposition an Kanten (11) der Außenhaut (10) des Fahrzeugkopfs anliegt.

13. Fahrzeugkopf (1) nach einem der vorstehenden Ansprüche, der mit einem oder mehreren Ausrüstungsteilen ausgestattet ist, die an der Körperstruktur (20) des Fahrzeugkopfs (1) befestigt sind, von der Scheinwerferanordnung (40) in der Betriebsposition bedeckt und von außen zugänglich sind, wenn die Scheinwerferanordnung (40) in der Wartungsposition ist.

14. Fahrzeugkopf (1) nach Anspruch 13, wobei die eine oder die mehreren Ausrüstungsteile eines oder mehrere der Folgenden einschließen:
- ein mechanisches Ausrüstungsteil, insbesondere ein Überkletterschutz, ein Puffer, ein Stoßdämpfer;
- ein pneumatisches Ausrüstungsteil, insbesondere ein Absperrhahn, Ventile, Filter, Verteiler;
- ein elektrisches Ausrüstungsteil;
- eine Pfeife.

## Revendications

1. Tête de véhicule (1), comprenant une unité d'équipement pouvant être ouverte et positionnée au centre, telle qu'une passerelle centrale (30), un capot central (70) ou une porte d'évacuation, et au moins un premier ensemble de phares latéraux (40) situés latéralement par rapport à l'unité d'équipement pouvant être ouverte et positionnée au centre, dans laquelle le premier ensemble de phares latéraux (40) comprend une unité de phares (41) et un capot de phare (42) fixés l'un à l'autre, le capot de phare (42) étant relié à la structure de carrosserie (20) de la tête de véhicule (1) par une première charnière (50) et pouvant être déplacé autour d'un premier axe de charnière (A) entre une position de fonctionnement du premier ensemble de phares latéraux (40) et une position d'entretien du premier ensemble de phares latéraux (40),
**caractérisée en ce que**
la tête de véhicule (1) est une tête de véhicule ferroviaire et est équipée d'un moteur d'essuie-glace (60), recouvert par un couvercle de moteur d'essuie-glace (61) fixé à la structure de carrosserie (20) de la tête de véhicule (1) au moyen d'éléments de fixation (62), dans laquelle les éléments de fixation (62) sont recouverts par l'ensemble de phares (40) en position de fonctionnement et accessibles de l'extérieur lorsque l'ensemble de phares (40) est en position d'entretien.

2. Tête de véhicule (1) selon la revendication 1, dans laquelle le premier axe de charnière (A) est vertical.

3. Tête de véhicule (1) selon l'une quelconque des revendications précédentes, dans laquelle au moins l'un parmi les éléments suivants est vrai :
- le premier axe de charnière (A) est plus proche d'un plan central longitudinal (P) de la tête de véhicule (1) que le centre de gravité du premier ensemble de phares latéraux (40).
- le premier axe de charnière (A) est plus éloigné du plan central longitudinal (P) que le centre de gravité du premier ensemble de phares latéraux (40).
- le premier axe de charnière (A) est situé en retrait par rapport à un revêtement extérieur (10) de la tête de véhicule (1) de manière à être recouvert par le revêtement extérieur (10) de la tête de véhicule (1).
- la première charnière (50) a un support fixé à la structure de carrosserie (20) de la tête de véhicule (1) et un support pivotant fixé au premier ensemble de phares latéraux (40).
- la première charnière (50) est dotée d'une butée pour empêcher ou limiter un mouvement vers l'extérieur de l'ensemble de phares (40) au-delà de la position d'entretien.

4. Tête de véhicule (1) selon l'une quelconque des revendications précédentes, dans laquelle le capot de phare (42) affleure le revêtement extérieur (10) de la tête de véhicule (1) en position de fonctionnement.

5. Tête de véhicule (1) selon l'une quelconque des revendications précédentes, comprenant en outre une première cavité latérale (2), qui est fermée par le capot de phare (42) en position de fonctionnement et accessible de l'extérieur lorsque l'ensemble de phares (40) est en position d'entretien.

6. Tête de véhicule (1) selon l'une quelconque des revendications précédentes, dans laquelle l'unité d'équipement positionnée au centre est un capot central (70) articulé à la structure de carrosserie (20) de la tête de véhicule par l'intermédiaire d'un ensemble de charnières de capot (50a) et pouvant pivoter entre une position de fonctionnement et une position d'entretien.

7. Tête de véhicule (1) selon la revendication 6, comprenant en outre une cavité centrale (3), qui est fermée par le capot central (70) en position de fonctionnement et accessible de l'extérieur lorsque le capot central (70) est en position d'entretien, la cavité centrale (3) abritant de préférence un élément d'accouplement (80).

8. Tête de véhicule (1) selon la revendication 7, en combinaison avec la revendication 5, dans laquelle la cavité centrale (3) est directement reliée à la cavité latérale (2) de sorte que la cavité latérale (2) est au moins partiellement accessible de l'extérieur lorsque l'ensemble de phares (40) est en position de fonctionnement et le capot central (70) en position d'entretien, et que la cavité centrale (3) est au moins partiellement accessible de l'extérieur lorsque l'ensemble de phares (40) est en position d'entretien et que le capot central (70) est en position de fonctionnement.

9. Tête de véhicule (1) selon l'une quelconque des revendications 6 à 8, dans laquelle l'ensemble de phares (40) en position de fonctionnement est fixé au revêtement extérieur (10) ou à la structure de la carrosserie (20) de la tête de véhicule (1) au moyen d'éléments de fixation (44), qui sont accessibles de l'extérieur lorsque le capot central (70) est en position d'entretien et ne sont pas accessibles de l'extérieur lorsque le capot central (70) est en position de fonctionnement.

10. Tête de véhicule (1) selon l'une quelconque des revendications 1 à 8, dans laquelle l'ensemble de phares (40) en position de fonctionnement est fixé au revêtement extérieur (10) ou à la structure de carrosserie (20) de la tête de véhicule (1) au moyen d'éléments de fixation (44) qui sont accessibles de l'extérieur lorsque le phare est en position de fonctionnement.

11. Tête de véhicule (1) selon l'une quelconque des revendications 9 à 10, dans laquelle les éléments de fixation (44) sont en retrait par rapport à une surface extérieure (12) du revêtement extérieur (10) ou à une surface extérieure (45) de l'ensemble de phares (40) en position de fonctionnement.

12. Tête de véhicule (1) selon l'une quelconque des revendications précédentes, dans laquelle l'ensemble de phares (40) est doté d'un joint d'étanchéité (43) qui, en position de fonctionnement, s'appuie sur les bords (11) du revêtement extérieur (10) de la tête de véhicule.

13. Tête de véhicule (1) selon l'une quelconque des revendications précédentes, équipée d'une ou plusieurs pièces d'équipement fixées à la structure de carrosserie (20) de la tête de véhicule (1), recouvertes par l'ensemble de phares (40) en position de fonctionnement et accessibles de l'extérieur lorsque l'ensemble de phares (40) est en position d'entretien.

14. Tête de véhicule (1) selon la revendication 13, dans laquelle la ou les pièces d'équipement comportent un ou plusieurs des éléments suivants :
- une pièce d'équipement mécanique, notamment un dispositif antichevauchement, un pare-chocs, un amortisseur ;
- une pièce d'équipement pneumatique, notamment un robinet d'arrêt, des vannes, des filtres, des collecteurs ;
- une pièce d'équipement électrique ;
- un sifflet.
